# DEMANDE DE BREVET EUROPEEN

(11) **EP 2 458 303 A1**
(43) Date de publication de la demande: **30.05.2012**
(21) Numéro de dépôt: 11306556.9
(22) Date de dépôt: 24.11.2011
(51) Int. Cl.: F24J 2/52, F24J 2/46

(54) **Dispositif de montage de panneaux solaires en toiture et agencement incluant ce dispositif**

(30) Priorité: 24.11.2010 FR 1059805
(71) Demandeur: Ecogelec, 19290 Saint Remy (FR)
(72) Inventeur: Cortes, Gérard, 78350 Jouy En Josas (FR)
(74) Mandataire: Cenatiempo, Julie Adeline Anne

(57) **Abrégé**

L'objet de l'invention est un dispositif de fixation de panneaux solaires PS sur la charpente d'un toit, caractérisé en ce qu'il comprend une embase (10) avec un profil en C, comprenant une branche (16) supérieure, une branche (18) inférieure, la branche (16) supérieure étant plus courte que la branche (18) inférieure, une branche (20) verticale de la hauteur d'un panneau solaire PS, ainsi qu'une butée (22) médiane qui assure la liaison entre les branches (16) supérieure et (18) inférieure et qui se prolonge sur une hauteur h formant entretoise (24)

## Description

La présente invention concerne un dispositif de montage de panneaux solaires en toiture.

L'invention couvre aussi l'agencement incluant ce dispositif.

Les panneaux solaires doivent être rapportés sur des surfaces exposées aux photons et de façon générale qui sont des surfaces inutilisées.

Les toitures de maisons particulières comme de locaux professionnels ou industriels sont des cibles particulièrement attractives.

Les toitures sont recouvertes d'une couverture pour assurer l'étanchéité et il existe un très grand nombre de revêtements tuiles ou ardoises mais surtout dans chacun des secteurs de très nombreuses variantes.

Les tuiles peuvent être de type canal, mécaniques avec emboîtement et il existe dans ce cas également de très nombreux modèles de tuiles.

Une toiture repose sur une charpente et au final, de façon générale, la couverture repose sur des liteaux, partie intégrante de la charpente, liteaux qui sont orientés transversalement au sens de la pente.

On comprend dès lors que pour intégrer des panneaux solaires à une toiture, le problème primordial est de conserver le rôle de barrière à la pluie, ceci quelles que soient les conditions, y compris en cas de vent associé à la pluie.

Néanmoins, il existe aussi d'autres problèmes liés à la matière, à savoir, la production d'électricité.

En effet, il faut se préoccuper des risques liés à la foudre, des courants de fuite et de la mise à la terre.

Concernant les panneaux à cellules photovoltaïques aptes à fournir de l'électricité, il existe au moins deux catégories à savoir des panneaux avec un cadre périphérique et des panneaux sans cadre, dits laminés, donc plus minces. Enfin, il est nécessaire que le montage soit industriel en requérant un temps minimal de montage, une facilité de pose, une modification minimale de la charpente et que le coût des produits et de la pose soient également réduits, tout ceci sans sacrifier à la fiabilité.

Le dispositif selon la présente invention propose de pallier les problèmes soulevés et de répondre à la demande dans ce domaine.

A cet effet, il va être décrit un mode de réalisation particulier, non limitatif, ceci en regard des dessins annexés permettant une illustration de la description qui va suivre, les figures de ces dessins représentant :
- Figure 1 : une vue en perspective du dispositif selon la présente invention présenté de façon isolée,
- Figure 2 : une vue d'un montage d'un panneau dans le dispositif selon la présente invention,
- Figure 3 : une vue du dispositif adapté aux angles,
- Figure 4 : une vue en coupe d'un agencement d'un panneau en toiture avec le dispositif selon la présente invention, et les moyens de recueil et d'écoulement des eaux,
- Figure 5 : une vue d'une cale en forme pour le montage d'un bac associé au dispositif selon la présente invention.
- Figure 6 : une vue d'une cale pour le montage d'un bac associé au dispositif selon la présente invention avec passage de câble,
- Figure 7 : une vue en coupe verticale longitudinale schématique d'un montage de deux panneaux.

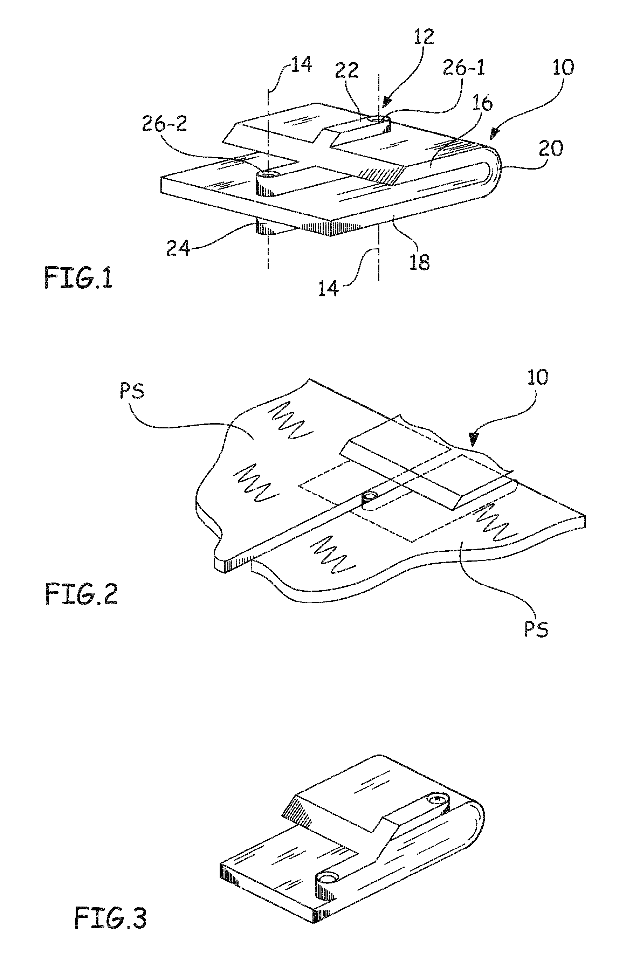

Sur la figure 1, on a représenté une vue d'un dispositif selon la présente invention.

Ce dispositif comprend une embase 10 et des moyens 12 de fixation sous forme de vis 14. Les vis 14 retenues sont du type tirefond afin de permettre un vissage à forte efficacité dans le bois des pièces de charpente, en l'occurrence dans le montage présenté, des liteaux L et chevrons Ch. La charpente peut aussi être de type spécifique avec un agencement adapté, peu importe la pièce de charpente support de l'installation photovoltaïque.

L'embase 10 est réalisée en matériau de synthèse du type matière plastique, polyéthylène ou polypropylène, éventuellement chargée de façon à lui conférer la résistance mécanique recherchée et une intégrité aux Ultraviolets.

Cette embase 10 se présente sous la forme d'un C avec la branche 16 supérieure plus courte que la branche 18 inférieure.

La branche 20 verticale du C est de la hauteur d'un panneau solaire PS destiné à être reçu dans ladite embase 10.

Cette embase est une embase double, symétrique, de façon à recevoir les angles de deux panneaux solaires PS adjacents au sein d'une surface de panneaux solaires.

Cette embase comporte éventuellement des nervures ou des renforts venus de moulage de façon à raidir le profil, les dimensionnements étant à la portée de l'homme de l'art dans le domaine du moulage des matières plastiques.

L'embase représentée sur la figure 1 est double puisqu'elle est apte à recevoir les angles de deux panneaux solaires PS adjacents.

Cette embase comporte de façon complémentaire une butée 22 médiane formant séparation, également venue de moulage, l'embase étant monolithique.

Cette butée 22 assure la liaison entre la branche 16 supérieure et la branche 18 inférieure et se prolonge au-delà de la branche 16 supérieure et en deçà de la branche 18 inférieure.

Cette butée 22 médiane se prolonge en partie inférieure, sur une hauteur h formant entretoise 24, dont le rôle sera explicité ultérieurement.

L'embase 10 porte un premier et un second trous 26-1 et 26-2.

Ces deux trous 26-1 et 26-2 sont disposés dans la partie médiane de l'embase 10 et en l'occurrence :
- le premier trou 26-1 traverse la branche 16 supérieure, la butée 22 médiane, la branche 18 inférieure et l'entretoise 24, et
- le second trou 26-2 traverse la butée 22 médiane, la branche 18 inférieure et l'entretoise 24.

De façon avantageuse, l'embase 10 possède une branche 16 supérieure dont l'extrémité libre est chanfreinée.

On note dans le mode de réalisation représenté que, vue de dessus, l'intersection entre la branche 16 supérieure et la butée 22 médiane est un angle droit.

Le panneau solaire PS monté comme sur la figure 2 est un panneau du type sans bordure métallique. Les panneaux de ce type sont des panneaux minces de l'ordre de 5 mm pour donner un ordre d'idées.

Ainsi, les panneaux PS peuvent porter des cellules photovoltaïques jusqu'aux bords de la surface du panneau, surtout que ces cellules sont maintenant de forme carrée ou rectangulaire en laissant vierge un bordure très étroite. La surface active est donc optimisée. C'est la raison pour laquelle l'embase 10 est elle aussi optimisée afin de ne pas recouvrir la moindre zone active du panneau. L'embase 10 double, symétrique, est utilisée pour des panneaux solaires PS juxtaposés latéralement mais aussi longitudinalement, l'axe longitudinal étant la pente du toit pour la présente description.

Dans le cas d'une juxtaposition latérale, les panneaux solaires PS sont introduits entre les branches 16 supérieure et 18 inférieure, pincés, la butée médiane assurant la séparation comme il sera montré ultérieurement.

Quant aux deux panneaux juxtaposés longitudinalement, l'embase 10 assure l'immobilisation de la partie haute du premier panneau par la surface inférieure de la branche 16 inférieure tandis que le panneau juxtaposé longitudinalement vient se loger, pincé, dans le C du dispositif selon la présente invention.

Le problème subsistant reste l'étanchéité entre les bords de juxtaposition longitudinale des panneaux.

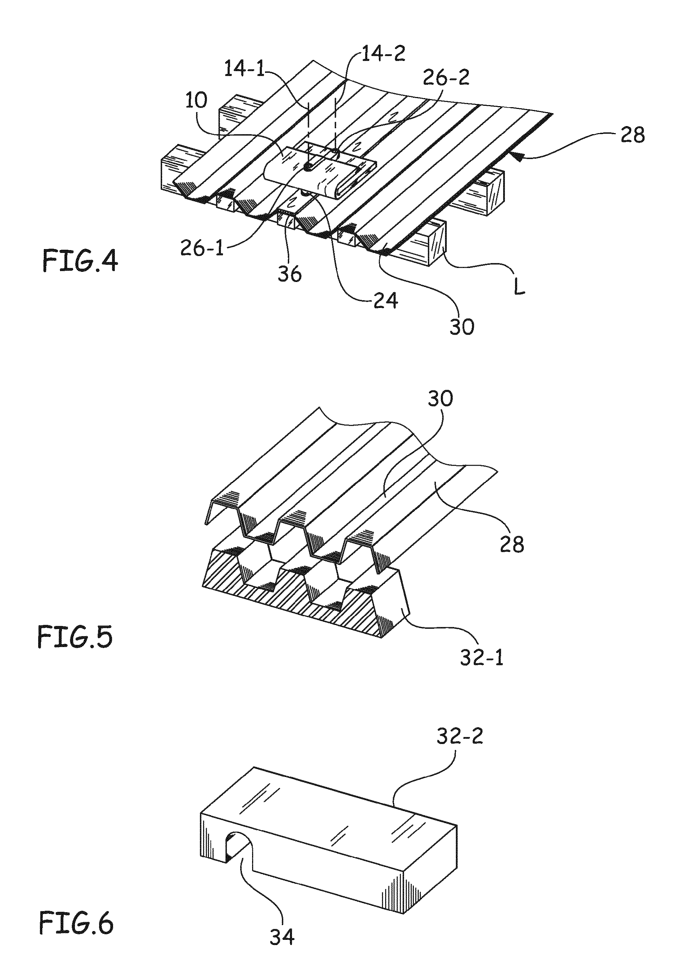

A cet effet, il est prévu, comme montré sur la figure 4, des liteaux L déjà rapportés sur la charpente, liteaux qui recevaient préalablement la couverture qui a été retirée au droit de la zone devant recevoir les panneaux solaires PS. Sur ces liteaux il convient de rapporter des moyens 28 de recueil et d'écoulement des eaux, en l'occurrence des bacs 30 3 ondes, du type de ceux qui sont commercialisés sous la dénomination Onduline par exemple.

Ces bacs 30 ont par exemple la forme représentée sur la figure 4, à savoir des ondes à section trapézoïdale.

Ces bacs sont rapportés directement sur les liteaux L de la charpente, avec leur axe longitudinal suivant le sens de la pente. Afin de renforcer la résistance à l'écrasement et d'éviter toute déformation, les bacs peuvent comporter des liteaux de renfort sous les ondes positives, comme représenté sur cette même figure 4, ces liteaux venant reposer sur les liteaux L de la charpente.

Une variante consiste à recourir à une cale 32-1 spécifique, de profil conjugué de celui du bac, qui se glisse sous ledit bac, au droit d'un liteau L. Un autre type de cale 32-2 spécifique est montré figure 6 comprenant de plus un passage 34 de câble. Ce passage a pour but de protéger les câbles des intempéries, des ultraviolets, et surtout d'empêcher la connectique de se positionner dans les ondes négatives du bac dans lesquelles s'effectuent les écoulements. On peut imaginer qu'il se produise des défauts d'isolement pour le moins.

Les câbles de raccordement entre panneaux et des panneaux à l'onduleur restent un problème et il est nécessaire de faire attention à ne pas les pincer, les percer ou les plier.

Les bacs 30 peuvent comporter 2 ou 4 ondes d' écoulement suivant les besoins.

Les embases 10 sont rapportées sur l'onde centrale positive du bac et les moyens 12 de fixation, en l'occurrence les vis 14-1 et 14-2 traversent l'embase 10 par les trous 26-1 et 26-2 ménagés à cet effet et viennent mordre dans les liteaux L de la charpente après avoir traversé l'onde du bac.

De façon avantageuse, il est possible d'adjoindre un joint 36 élastomère ou une mousse, interposé entre l'entretoise 24 qui prolonge la butée 22 médiane et l'onde médiane positive.

Ce joint 36 a pour effet d'assurer une isolation vibratoire, de compenser les éventuels différentiels de hauteur et de compléter et renforcer l'étanchéité au droit des passages des vis 14-1 et 14-2, permettant notamment d'atteindre la norme IP4.

De façon encore plus avantageuse, il est prévu un joint 36 élastomère rapporté sur toute la longueur de chacune des ondes positives et dans ce cas, il est possible d'obtenir un classement en IP5 en retenant pour l'agencement un bac à 5 ondes.

On comprend que le panneau solaire PS adjacent dans le sens longitudinal tel que représenté en trait discontinu viendra reposer sur les extrémités de ces bandes. Il convient de prévoir en périphérie de la surface de panneaux solaires PS mis en place, des abergements qui viennent reprendre les écoulements et assurent le chevauchement avec la couverture du toit, ceci de façon connue.

Pour les montages en bordures, il est prévu des dispositifs identiques dans leur géométrie sauf à supprimer la partie inutile droite ou gauche, voir figure 3.

De façon avantageuse, il peut aussi être prévu des pièces d'angle non représentée, car non nécessaire pour un montage si ce n'est pour des raisons esthétiques.

Il est à noter que des supports intermédiaires SI peuvent être positionnés sous les panneaux solaires uniquement de façon à limiter la flexion desdits panneaux qui sont de faible épaisseur. De tels supports n'ont aucun rapport avec le dispositif selon la présente invention et peuvent prendre toute forme adaptée. On constate qu'il est possible avec l'agencement représenté et décrit, de retirer un panneau au milieu de la surface de panneaux sans nécessité un démontage d'une rangée complète.

En effet, chaque embase 10 peut être retirée aisément et de façon isolée. En retirant deux embases, on peut retirer un panneau donné.

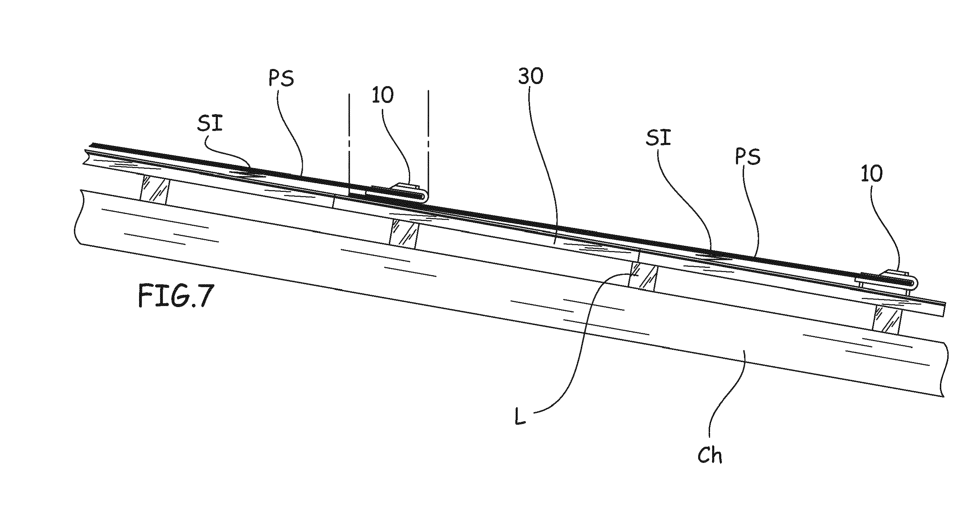

On constate aussi que la longueur de recouvrement, voir trait mixte sur la figure 7, peut être réglée en rapprochant plus ou moins les dispositifs selon la présente invention. Si les rangées sont rapprochées, la distance de recouvrement augmente.

De fait s'il y a recouvrement, il sera utilisé des panneaux disposant d'une zone vierge, sans capteur photovoltaïque en partie supérieure, cette zone étant masquée au montage par le recouvrement.

Le matériau utilisé limite les fuites éventuelles.

On note aussi la très faible hauteur de l'agencement limitant ainsi la mise en saillie d'une surface de panneaux montés avec des dispositifs selon la présente invention.

La faible épaisseur et l'agencement de l'embase avec la branche supérieure évitent la portée d'ombres sur les panneaux, ombres qui seraient susceptibles de porter atteinte au rendement.

On note que la seule contrainte de cet agencement est celle de prévoir un montage sur un toit en pente ayant une pente de toit supérieure à l'inclinaison de chacun des deux panneaux juxtaposés longitudinalement et se chevauchant.

## Revendications

1. Dispositif de fixation de panneaux solaires PS sur la charpente d'un toit en pente, **caractérisé en ce qu'**il comprend une embase (10) avec un profil en C, comprenant une branche (16) supérieure, une branche (18) inférieure, la branche (16) supérieure étant plus courte que la branche (18) inférieure, une branche (20) verticale de la hauteur d'un panneau solaire PS, ainsi qu'une butée (22) médiane qui assure la liaison entre les branches (16) supérieure et (18) inférieure et qui se prolonge sur une hauteur h formant entretoise (24).

2. Dispositif de fixation de panneaux solaires PS sur la charpente d'un toit selon la revendication 1, **caractérisé en ce que** la butée (22) médiane se prolonge au-delà de la branche (16) supérieure et en deçà de la branche (18) inférieure.

3. Dispositif de fixation de panneaux solaires PS sur la charpente d'un toit selon la revendication 1 ou 2, **caractérisé en ce qu'**il comprend deux trous (26-1, 26-2) disposés dans la butée (22) médiane de l'embase (10) :
- le premier trou (26-1) traversant la branche (16) supérieure, la butée (22) médiane, la branche (18) inférieure et l'entretoise (24), et
- le second trou (26-2) traversant la butée (22) médiane, la branche (18) inférieure et l'entretoise (24).

4. Dispositif de fixation de panneaux solaires PS sur la charpente d'un toit selon l'une quelconque des revendications précédentes, **caractérisé en ce qu'**il est réalisé en matière plastique.

5. Dispositif de fixation de panneaux solaires PS sur la charpente d'un toit selon l'une quelconque des revendications précédentes, **caractérisé en ce que** l'angle formé entre la butée (22) médiane et la branche (16) supérieure est un angle droit.

6. Dispositif de fixation de panneaux solaires PS sur la charpente d'un toit selon l'une quelconque des revendications précédentes, **caractérisé en ce qu'**il est symétrique de façon à accueillir deux angles de panneaux solaires PS juxtaposés.

7. Agencement de montage de panneaux solaires PS incluant des dispositifs selon l'une des revendications 1 à 6, **caractérisé en ce qu'**il comprend des moyens (28) de recueil et d'écoulement des eaux disposés sous les embases (10) desdits dispositifs.

8. Agencement de montage de panneaux solaires PS selon la revendication 7, **caractérisé en ce que** les moyens (28) de recueil et d'écoulement des eaux sont des bacs (30) à ondes à section trapézoïdale.

9. Agencement de montage de panneaux solaires PS selon la revendication 7 ou 8, **caractérisé en ce qu'**il comprend un joint (36) interposé au moins entre l'entretoise (24) de chaque embase (10) et les moyens (28) de recueil et d' écoulement des eaux.
